# EUROPEAN PATENT APPLICATION

(11) **EP 1 033 656 A1**
(43) Date of publication of application: **06.09.2000**
(21) Application number: 99937012.5
(22) Date of filing: 10.08.1999
(51) Int. Cl.: G06F 13/00, G06F 15/00, G06F 17/30, G06K 7/00

(54) **INTERNET ACCESS SYSTEM**

(30) Priority: 10.08.1998 JP 34650298
(71) Applicant: ASCII CORPORATION, Tokyo (JP)
(72) Inventor: ASCII CORPORATION, Tokyo (JP)
(74) Representative: Luckhurst, Anthony Henry William
(86) International application number: JP9904325
(87) International publication number: WO0010091

(57) **Abstract**

An Internet access system is provided with which servers containing required information can be specified extremely easily. The Internet access system is equipped with a terminal device 10 connected to the Internet 100 and having a bar code reader 22; and a registry server 30 connected to the Internet 100 and having a bar code database 36 in which bar code information and server information are stored in association, a conversion section 32 which searches the bar code database and obtains corresponding server information, and a transmitting and receiving means 34 which sends server information obtained by the search back to the terminal device 10 from which the bar code information was transmitted.

## Description

### TECHNICAL FIELD

The present invention relates to an Internet access system mainly for displaying a specific www (world wide web) page of the Internet. In addition, the present invention relates to access for ftp (file transfer protocol) servers and use of electronic mail servers. The present application is based on patent application No. Hei 10-346502 filed in Japan and the contents thereof are incorporated herein by reference.

### BACKGROUND ART

In order to obtain required information over the Internet, it is necessary to connect to the www server which is transmitting that information, and the file in which that information is recorded must be specified. In order to do this, a person who wishes to obtain information must input a URL (uniform resource locator) into a terminal device, and the input thereof is generally conducted by means of manual input by operating a keyboard.

For this reason, when attempting to obtain detailed information for a specific product, it is necessary to manually input a long URL. For example, when seeking information on the types of Chardonnay wines produced by the Woodridge Company, according the general and normal method, the long URL of
http://www.woodridge.co.jp/products/wines/chardonnay.html
is manually input. This type of input operation is extremely troublesome, and is difficult for general people who are inexperienced.

### DISCLOSURE OF INVENTION

The present invention aims at solving the above-described circumstances and has as an object the provision of an Internet access system with which it is possible to access desired information extremely easily.

In order to solve the above-described problem, the present invention has a terminal device connected to the Internet and having a bar code reading means, and a transmitting means for the bar code information; and a server connected to the Internet having a memory device for storing specific server information corresponding to specific bar code information, and a search and return means for searching the above-mentioned memory device based on the transmitted bar code information and sending corresponding server information back to the terminal device from which the above-mentioned bar code information was transmitted, wherein the terminal device is equipped with a means for using the server indicated by the above-mentioned sent server information.

Consequently, by means of the present invention, since it is possible to obtain server information automatically simply by reading a bar code, the trouble associated with manual input can be avoided, and the effect of being able to access required information extremely easily is obtained.

In addition, the present invention has a terminal device connected to the Internet and having an input means for inputting bar code information and a transmitting means for transmitting bar code information input by means of the above-mentioned input means; and a server information providing means connected to the Internet and equipped with a memory means for storing in association various bar code information and server information for servers which provide information related to matter indicated by each of the various bar code information respectively, and a search and return means for searching the above-mentioned memory means based on transmitted bar code information and sending corresponding server information back to the terminal device from which the above-mentioned bar code information was transmitted, wherein the terminal device uses the server indicated by the above-mentioned server information sent back from the above-mentioned server information providing means.

### BRIEF DESCRIPTION OF THE DRAWINGS

Figure 1 is a block diagram showing the whole structure of the Internet access system according to an embodiment of the present invention.
Figure 2 is a diagram for explaining the operation of the above-mentioned Internet access system.

### BEST MODE FOR CARRYING OUT THE INVENTION

In the following, an Internet access system according to an embodiment of the present invention will be explained in detail with reference to the figures. It should be noted that the expression "server information" which is used in the Specification and Claims of the present application means information specifying a specific server, or information for specifying a specific server and for specifying a file within that server. It indicates a higher order concept and includes URL and IP addresses, as well as directory names and file names within a server.

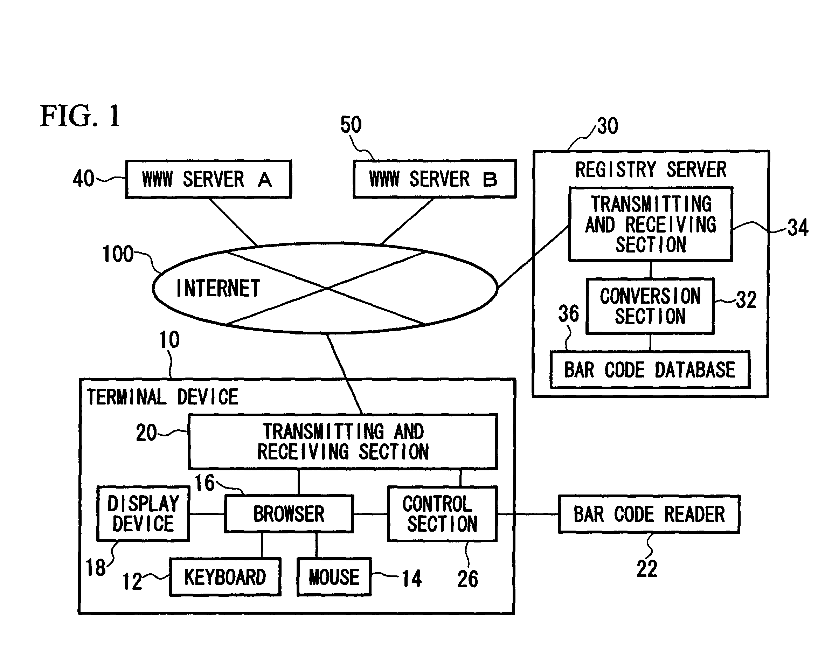

Figure 1 is a block diagram of the whole structure of an Internet access system according to an embodiment of the present invention.

In Figure 1, reference 10 indicates a terminal device which can be used for internet access. In practice, this terminal device 10 can be realized by means of a personal computer or the like, and has a key-board 12, a mouse 14, a browser 16, a display device 18, a transmitting and receiving section 20, a control section 26, and the like, and a bar code reader 22 is connected. It should be noted that each of these structures may be in a hardware-structured form, a form realized by means of software, or a form realized by means of hardware and software. The keyboard 12 and the mouse 14 are for the operator to input instruction information, and the input information is supplied to the browser 16. The browser 16 caries out exchange of information with the www server A 40, www sewer B 50, and the like, via the transmitting and receiving section 20 by means of a protocol such as http (hyper text transfer protocol), and the received information is displayed on display device 18. The transmitting and receiving section 20 is formed by means of a modem or an ethernet card, and software, and brings about physical and logical connection and communication between the Internet 100 and the terminal device 10.

The bar code reader 22 reads bar codes which are attached to products and the like, and outputs that bar code information to the control section 26. Bar codes are widely used such as with the JIS standard commonly referred to as the JAN (Japan Article Number), and the like. The control section 26 controls the operation of the terminal device 10. The bar code information which is output to this control section 26 from the bar code reader 22 is transmitted to a registry server 30 from the terminal device 10.

The registry server 30 converts the bar code information which is received from the terminal device 10 via the Internet 100 into server information corresponding to that bar code information, and sends it back to the terminal device 10 from which that bar code information was sent. The registry server 30 has a conversion section 32, a transmitting and receiving section 34 and a bar code database 36. The transmitting and receiving section 34 performs the same types of operations as the transmitting and receiving section 20 of the terminal device 10. The bar code database 36 is a database of association relationships for bar code information and server information. Information of various bar codes, and server information for servers which provide information related to products and the like indicated by each of these bar codes are register in the bar code database 36 with their associations. This bar code database 36 is realized, for example, by means of a hard disc, CD-ROM or the like. The conversion section 32 searches the bar code database 36 using the bar code information as a key, and sends server information for the key back to the terminal device 10.

The www server A 40 and www server B 50 are examples of www servers, and normally, extremely large numbers of them exist in a distributed manner. As the information related to products and the like which they provide, for example, the following can be mentioned:
(1) Wines: comments from producers, histories, characteristics of varieties, the climate of production years, and the like;
(2) Pharmaceuticals: up-to-date information on side effects of the pharmaceuticals, additionally indicated diseases for the pharmaceuticals, and the like;
(3) Electronic products: methods of use, warnings, improvement information, and the like for the electronic products; and
(4) Others: event information, promotional information, information on related products, information on new products, and the like.

In the following, the operation of an internet access system having the above structure will be explained.

### Manual Operation

First, the circumstances for manual input which does not make use of the access method characteristic of the present system will be explained. Using a keyboard 12, the operator manually inputs the URL which has been previously assigned to desired information. Using the earlier example, when seeking information on the types of Chardonnay wines produced by the Woodridge Company, The following URL should be input:
http://www.woodridge.co.jp/products/wines/chardonnay.html

The portion "www.woodridge.co.jp" from the above-mentioned URL is transmitted from the browser 16 via the transmitting and receiving section 20 to a DNS (domain name service) server (not shown in the Figures) provided somewhere on the Internet 100, where it is converted to an IP address, and then returned to the terminal device 10.

Now, supposing the www server A 40 is the www server indicated by the above-mentioned www.woodridge.co.jp, the terminal device 10 uses the returned IP address, and transmits a request for the required file to the www server A 40. Then the file which has been stored in the www server A 40 in advance is sent to the terminal device 10. This is received by the browser 16 via the transmitting and receiving section 20, the browser 16 converts it into the display form indicated by the contents of the file, and displays it on the display device 18.

### The Access Method Characteristic of the Present System

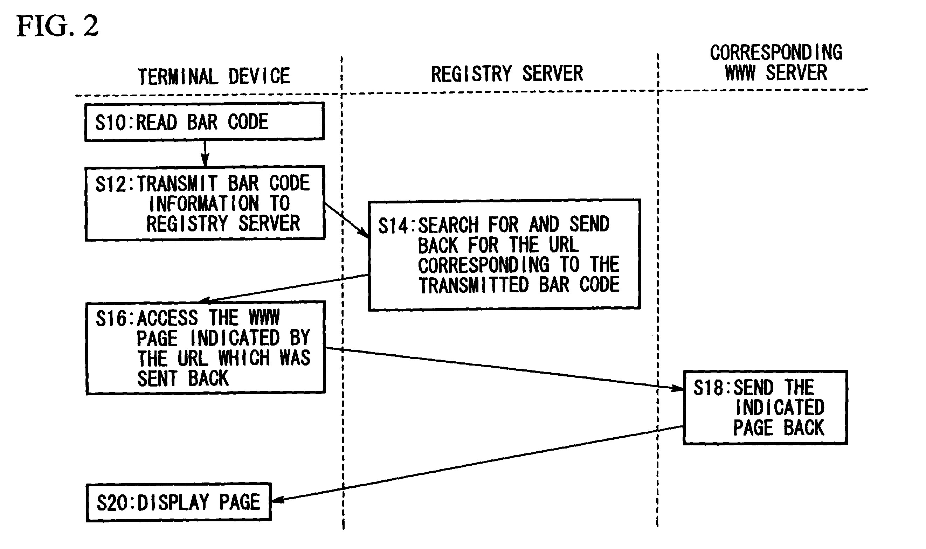

In the following, the case of an access method characteristic of the present system in which a bar code is read, and from this bar code information, a www server having information related to this bar code information is accessed will be explained with reference to Figure 1 and Figure 2. Figure 2 is a diagram for explaining the operation of the present Internet access system, and each step is indicated by Sn (n = 10, 12, 14, and so on).

First, the operator reads a specific bar code attached to a product or the like by operating a bar code reader 22 (S10). The read bar code information is sent to a registry server 30 via the control section 26 and the transmitting and receiving section 20 of the terminal device 10, with the terminal device 10 as the transmission source, using a protocol used in normal Internet communication (S12).

Using, for example, a situation in which a bar code is printed on the label of a certain wine bottle of the Woodridge Company, and the information of that bar code is 4986003871885, this is read by the bar code reader 22 and sent to the registry server 30 via the control section 26 and the transmitting and receiving section 20. At this time, various data is added to the bar code information in order for it to comply with normal Internet communication protocols.

The registry server 30 receives the bar code information via the transmitting and receiving section 34, and the conversion section 32 searches the bar code database 36 using this bar code information as a key, and extracts server information corresponding to this bar code information. Then, this extracted server information is sent back to the terminal device 10 via the transmitting and receiving section 34 (S14).

More specifically, in the above-mentioned example, the bar code information 4986003871885, and the URL www.woodridge.co.jp/products/wines/chardonnay.html together with the appended information therefor are stored in the bar code database 36 in association, and this URL is sent back to terminal device 10. In addition, when this is being sent back, various data is added to it in order for it to comply with normal Internet communication protocols.

In addition, if the IP address indicating the server of www.woodridge.co.jp is 234.123.234.123, then the server information could also be recorded in the bar code database 36 in the form of
234.123.234.123/products/wines/chardonnay.html
and this could be sent back to the terminal device 10.

When the information containing the URL sent back from the registry server 30 is received by the terminal device 10, it passes through the transmitting and receiving section 20 and is processed by the control section 26 and the browser 16, and a part thereof is displayed on the display device 18. Then, if this URL indicates www server B 50, then the terminal device 10 accesses www server B 50 (S16).

More specifically, the portion "www.woodridge.co.jp" from the above-mentioned URL is transmitted using normal Internet communication protocols from the browser 16 via the transmitting and receiving section 20 to a DNS (domain name service) server (not shown in the Figures) provided somewhere on the Internet 100, where it is converted to an IP address, and then returned to the terminal device 10. Then, if the www server B 50 is that server, the terminal device 10, using the returned IP address, transmits a request to the www server B 50 to send the required file.

Thereby, the file which has been stored in the www server B 50 in advance is sent to the terminal device 10 from the www server B 50 (S18). This is received by the browser 16 via the transmitting and receiving section 20, the browser 16 converts it into the display form

indicated by the contents of the file, and displays it on the display device 18 (S20). It should be noted that if the server information is sent back from the registry server 30 with information replaced with the IP address, then the above-described DNS procedures can be omitted.

In the above-described way, the present Internet access system has the features of obtaining URLs, and the like, from product codes, and the like, contained in bar codes, as a main function, and providing this function in a server format.

Moreover, when a search for a URL is conducted from bar code information, as the key, it is also possible to conduct the search using in addition to the bar code information, a combination of, for example, the date and time (for example, the campaign period for a product), locational information about the person accessing the system, and the like as the key.

In addition, if it is not possible to obtain corresponding server information by means of a search of the bar code database 36 based on specific bar code information, then it is possible to prepare memory means in which other specific server information is stored, and that can be searched and used.

In addition, in the above-described embodiment, it is also possible to charge a specific fee for registration and use of the registry server 30. In addition, when returning information from the registry server 30 to the terminal device 10, it is possible to include advertising and promotional material in the returned information, and it is possible charge a specific fee for that inclusion.

In addition, in the above-mentioned embodiment a bar code reader 22 can be used together with a keyboard, or it is possible to omit the bar code reader 22, and to manually input the symbols, English letters, and numbers appended to a bar code by means of key board 12, and thereby it is possible to realize the same above-mentioned function.

In addition, the present Internet access system can be utilized as systems such as the ones indicated below.
(1) By means of appending special bar codes to publications and using these bar codes with the present system, it is possible to provide more detailed information, or in the case of magazines and the like, it is possible to give information about following editions.
(2) By means of appending special bar codes to business cards and using these bar codes with the present system, it is possible to provide more detailed information such as, for example, business information, maps to offices, most recent positions, telephone and address changes, and the like.
(3) By means of appending special bar codes to advertisements which use the printed media and using these bar codes with the present system, it is possible to provide more detailed information related to the advertisement.
(4) By means of appending special bar codes to cards for games and using these bar codes with the present system, operations of on-line games can be made simple.

In addition, since in the present Internet access system, the bar code database is held in a centralized registry server format, it is possible to obtain the following effects which cannot be realized when the above-mentioned bar code database is held in each terminal device.
(1) It is possible to construct an extremely large bar code database, and this is extremely effective since at present bar codes are in use on a world wide scale.
(2) By means of simply changing the bar code database on the registry server, an effect is obtained such that all of the terminal devices which use the bar code database can benefit from that change.
(3) There are the effects that the load on the hardware and software of the extremely large number of terminal devices can be reduced, and costs lessened.

## Claims

1. An Internet access system characterized by:
a terminal device connected to the Internet and having a bar code reading means, and a transmission means for the bar code information; and
a server connected to the Internet and having
a memory device for storing specific server information corresponding to specific bar code information, and
a search and return means for searching the memory device based on transmitted bar code information and sending corresponding server information back to the terminal device from which the bar code information was transmitted;
wherein the terminal device is equipped with a means for using the server indicated by the sent server information.

2. An Internet access system characterized by:
a terminal device connected to the Internet and having
an input means for inputting bar code information, and
a transmitting means for transmitting bar code information input by means of the input means; and a server information providing means connected to the Internet and equipped with
a memory means for storing in association various bar code information and server information of servers which provide information related to matter indicated by each of the various bar code information, and
a search and return means for searching the memory means based on transmitted bar code information and sending corresponding server information back to the terminal device from which the bar code information was transmitted;
wherein the terminal device uses the server indicated by the server information sent back from the server information providing means.

3. An Internet access system according to claim 2, characterized in that the input means comprises a bar code reader, a keyboard, or both a bar code reader and a keyboard.

4. An Internet access system according to one of claims 1 to 3, wherein the memory device stores information containing IP addresses for servers as the server information.

5. An Internet access system according to one of claims 1 to 4, characterized in that the search and return means uses a combination of the transmitted bar code information and other information as a search key, and searches the memory means using the search key.

6. An Internet access system according to one of claims 1 to 5 characterized by having a plurality of the memory means for storing respectively different bar code information and server information.

7. An Internet access system according to one of claims 1 to 6, characterized in that the search and return means sends back other information together with the server information when sending the server information back.
